Europäisches Patentamt

European Patent Office

Office européen des brevets

(19)

(11) **EP 1 235 127 A2**

(12) **EUROPÄISCHE PATENTANMELDUNG**

(43) Veröffentlichungstag:
**28.08.2002 Patentblatt 2002/35**

(51) Int Cl.⁷: $G05B\ 19/418$

(21) Anmeldenummer: **02002389.1**

(22) Anmeldetag: **31.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.02.2001 DE 10108920**

(71) Anmelder: **Infineon Technologies AG**
**81669 München (DE)**

(72) Erfinder: **Pöppel, Gerhard, Dr.**
**93049 Regensburg (DE)**

(74) Vertreter: **Kindermann, Peter, Dipl.-Ing.**
**Karl-Böhm-Strasse 1**
**85598 Baldham (DE)**

(54) **Verfahren zum Überwachen einer Fertigung**

(57) Erläutert wird ein Verfahren, bei dem auf Fertigungseinheiten bezogene Werte für eine Gütegröße (YB) zur Bewertung der Fertigung ermittelt werden (Schritt 102). Für die Fertigungseinheiten werden jeweils Werte für mindestens eine Untersuchungsgröße und für eine Ausgleichsgröße erfasst (Schritte 104 und 106). Nach einer Gruppenbildung (Schritt 108) und einem Sortiervorgang (Schritt 110) wird eine justierte Größe ermittelt (Schritt 112). Die justierte Größe ist zum Auffinden von Fehlerursachen für Fertigungsfehler bestens geeignet.

FIG 3

```
        ┌───────────┐
        │   Start   │─── 100
        └───────────┘
              │
   ┌─────────────────────┐
   │  Ausbeute YB je Los │─── 102
   │      ermitteln      │
   └─────────────────────┘
              │
   ┌─────────────────────┐
   │    Produkt zu Los   │─── 104
   │      ermitteln      │
   └─────────────────────┘
              │
   ┌─────────────────────┐
   │    Gruppenbildung   │─── 108
   └─────────────────────┘
              │
   ┌─────────────────────┐
   │      Sortieren      │─── 110
   └─────────────────────┘
              │
   ┌─────────────────────┐
   │  justierte Ausbeute │─── 112
   │      berechnen      │
   └─────────────────────┘
              │
   ┌─────────────────────┐
   │   Maschine zu Los   │─── 113
   │      ermitteln      │
   └─────────────────────┘
              │
   ┌─────────────────────┐
   │    automatisches    │─── 114
   │ Anzeigen und Auswerten │
   └─────────────────────┘
              │
        ┌───────────┐
        │    Ende   │─── 116
        └───────────┘
```

Printed by Jouve, 75001 PARIS (FR)

EP 1 235 127 A2

**Beschreibung**

Die Erfindung betrifft ein Verfahren zum Überwachen einer Fertigung, bei dem Werte für eine Gütegröße zur Bewertung der Fertigung ermittelt werden. Außerdem werden Werte für mindestens eine Untersuchungsgröße erfasst, deren Auswirkung auf die Gütegröße zu untersuchen sind.

Beispielsweise sind die Werte auf Fertigungseinheiten bezogen. So gibt es Fertigungslose, die mehrere Halbzeuge enthalten, welche als Einheit durch das Fertigungssystem transportiert werden. Andere Fertigungseinheiten sind Fertigungshorden, die Halbzeuge enthalten, die gemeinsam in eine Bearbeitungsmaschine eingebracht werden. Die Fertigungseinheiten können jedoch auch einzelne Halbzeuge sein.

Eine häufig herangezogene Gütegröße bei der Herstellung integrierter Schaltkreise ist die Ausbeute, d.h. das Verhältnis aus der Anzahl funktionsfähiger Chips zur Gesamtanzahl von Chips auf einem Wafer. Jedoch lassen sich auch andere Gütegrößen nutzen.

In der Fertigung sind häufig Fragen zu beantworten wie:

- Hängt die Ausbeute davon ab, ob und wie die Produkte auf einer bestimmten Bearbeitungsmaschine bearbeitet worden sind?
- Hängt die Ausbeute von der Art des hergestellten Schaltkreises ab oder sind Schwankungen der Ausbeute nur darauf zurückzuführen, dass die Schaltkreise auf verschiedenen Bearbeitungsmaschinen produziert worden sind?

Die Untersuchungsgrößen sind bei diesen Fragestellungen die Bearbeitungsmaschinen bzw. die Produktart. Jedoch gibt es auch viele andere Untersuchungsgrößen, z.B. den Einfluss von Wartungszyklen oder von Fertigungspausen auf die Gütegröße.

Die Beantwortung solcher Fragen wird erschwert, wenn mit einem Fertigungssystem sehr viele verschiedene Produkte gefertigt werden und deshalb für bestimmte Produkte nur vergleichsweise wenig Messwerte vorhanden sind.

Von der schnellen Beantwortung der Fragen hängt es jedoch ab, ob die Ursache für einen Fehler schnell und mit einem geringen Aufwand durch hochspezialisiertes Bedienpersonal gefunden werden kann. Deshalb werden die Verfahren zum Überwachen der Fertigung ständig verbessert.

Es ist Aufgabe der Erfindung, zum Überwachen einer Fertigung ein einfaches Verfahren anzugeben, mit dessen Hilfe sich Ursachen für Fertigungsfehler insbesondere schnell und mit einer hohen Treffsicherheit ermitteln lassen und mit dessen Hilfe insbesondere der Einfluss bestimmter Einflussgrößen systematisch beseitigt werden kann. Außerdem sollen ein zugehöriges Programm, eine zugehörige Datenverarbeitungsanlage und zugehörige Daten angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass beim Untersuchen des Einflusses der Untersuchungsgröße auf die Gütegröße der Einfluss anderer Größen ausgeglichen werden muss, um sichere Vorhersagen zu treffen. Deshalb werden beim erfindungsgemäßen Verfahren auch Werte für eine Ausgleichsgröße erfasst, deren Auswirkung auf die Gütegröße ausgeglichen werden soll.

Nach einer Gruppenbildung hinsichtlich bestimmter Ausprägungen der Ausgleichsgröße lässt sich innerhalb einer Gruppe für die Werte der Gütegröße eine Reihenfolge aufstellen, beispielsweise werden die Werte vom kleinsten zum größten Wert geordnet. Anschließend lässt sich die Gütegröße verteilungsunabhängig aber abhängig von der Rangfolge justieren. Oft kann die Häufigkeitsverteilung der Gütegröße nicht oder nur mit großen Aufwand ermittelt werden, so dass die Verteilungsunabhängigkeit ein großer Vorzug ist. Damit ist die Rangreihenfolge bzw. der Platz in der Reihenfolge bestens geeignet, um Zusammenhänge unabhängig von der zugrundeliegenden Verteilung aufzudecken. Bei der Rangreihenfolge kommt es nicht auf die Größe des Unterschiedes zwischen benachbarten Rängen an. Entscheidend ist, dass Unterschiede bestehen, die das Sortieren und somit das Angeben einer Rangfolge erlauben.

Beim erfindungsgemäßen Verfahren werden deshalb für vorgegebene Ausprägungen der Ausgleichsgrößen Gruppen gebildet, in denen beispielsweise Fertigungseinheiten enthalten sind, bei denen die Ausgleichsgröße einen Wert hat, welcher die der Gruppe zugeordnete Ausprägung erfüllt. An Stelle der Fertigungseinheiten werden aber auch andere Bindeglieder zwischen Gütegröße, Untersuchungsgröße und Ausgleichsgröße eingesetzt. Innerhalb der Gruppen werden die Werte für die Gütegröße und aufgrund des Bindegliedes auch die Werte für die Untersuchungsgröße sortiert. Abhängig von der Sortierreihenfolge werden dann gruppenbezogen justierte Werte für die Gütegröße ermittelt, die bei der statistischen Auswertung an Stelle der Werte für die Gütegröße eingesetzt werden und ein Maß für den Platz in der Sortierreihenfolge sind. Zum Justieren eignet sich beispielsweise eine lineare Funktion.

Bei dem erfindungsgemäßen Verfahren werden die justierten Werte für die weitere Bearbeitung in einer Speichereinheit einer Datenverarbeitungsanlage gespeichert oder zur Auswertung auf einer Ausgabeeinheit ausgegeben, beispielsweise auf einem Drucker oder auf einer Anzeigeeinheit, d.h. z.B. auf einem LCD-Display oder auf einem Bildschirm.

Durch die Anwendung des erfindungsgemäßen Verfahrens lassen sich Fertigungsfehler mit einer etwa 10-fachen Auflösegenauigkeit im Vergleich zu bisherigen Verfahren finden.

In der Statistik werden folgende Skalenniveaus zur Beschreibung von statistischen Größen unterschieden:

- Nominalskalenniveaus, z.B. Bauelement A, Bauelement B und Bauelement C,
- Ordinalskalenniveaus, z.B. eine Benotung von 1 bis 10,
- ein Intervallskalenniveau, z.B. Sollwerte einer Widerstandsreihe, und
- ein Verhältnisskalenniveau, z.B. die Temperatur, bei der ein Bezugspunkt einbezogen wird.

Die beim erfindungsgemäßen Verfahren verwendete Gütegröße muss mindestens das Ordinalskalenniveau haben. Demzufolge kann die Gütegröße auch das Intervallskalenniveau oder das Verhältnisskalenniveau haben. Für die Untersuchungsgröße kann ein beliebiges Skalenniveau gewählt werden. Die Ausgleichsgröße ist üblicherweise eine kategoriale Größe, d.h. es gibt Wertegruppen.

Bei einer Weiterbildung beziehen sich die Werte der Gütegröße auf Fertigungseinheiten. Für die Fertigungseinheiten wird jeweils ein Wert die Untersuchungsgröße und ein Wert für die Ausgleichsgröße ermittelt. Fertigungseinheiten eignen sich als Bindeglied besonders gut, weil sehr viele Werte, die zur Steuerung der Fertigung eingesetzt werden auf Fertigungseinheiten bezogen sind.

Bei einer Weiterbildung des erfindungsgemäßen Verfahrens wird mit Hilfe der justierten Werte geprüft, ob die Untersuchungsgröße einen Einfluss auf die Gütegröße hat, vorzugsweise einen signifikanten Einfluss. Zum Nachweis eines signifikanten Einflusses werden die aus der Statistik bekannten Testverfahren eingesetzt, insbesondere parameterunabhängige Tests. Zur Bewertung des Tests wird die Signifikanz und/oder die Effektstärke herangezogen. Bei signifikanten Testergebnissen wird man eine nähere Analyse der in das Verfahren einbezogenen Daten durchführen. Dabei stellt sich dann beispielsweise heraus, dass eine bestimmte Maschine oder einige wenige Maschinen die Ausbeute besonders auffällig verringern oder erhöhen. Bei Maschinen, welche die Ausbeute verringern, muss die Fehlerursache gesucht werden. Aber auch Maschinen, die eine sehr hohe Ausbeute liefern, sind zu untersuchen, um festzustellen, worauf auf die erhöhte Ausbeute zurückzuführen ist. Wird eine Ursache gefunden, so lassen sich gegebenenfalls auch Anpassungen an den anderen Maschinen durchführen.

Bei der Signifikanz eines ersten Testergebnisses oder bei einer besonders hohen Effektstärke lassen sich Folgetests durchführen, um die Ursachen für Schwankungen der Gütegröße schneller aufzudecken. Dabei werden ebenfalls die aus der Statistik bekannten Testverfahren eingesetzt, z.B. der Man-Witney-Test, bei dem paarweise Vergleiche durchgeführt werden.

Bei einer nächsten Weiterbildung des erfindungsgemäßen Verfahrens werden die justierten Werte nach der folgenden Formel berechnet:

$$JW = R/(N+1),$$

wobei JW der justierte Wert, R die Stelle in der Sortierreihenfolge und N die Anzahl von Werten der Gütegröße in der betreffenden Gruppe sind.

Durch das Verwenden dieser einfachen Formel lassen sich die Werte für die justierte Gütegröße, z.B. die justierte Ausbeute, auf einfache Art und insbesondere mit wenig Rechenzeit berechnen. Die Berechnung lässt sich bei Bedarf ausführen oder einmal berechnete Werte werden in einer Tabelle gespeichert. Die Tabelle enthält für jede auftretende Anzahl von Fertigungseinheiten die justierten Werte. Aus der Tabelle werden dann die justierten Werte der Reihe nach ausgelesen und den sortierten Größen zugeordnet.

Die Gütegröße ist bei einer nächsten Weiterbildung:

- die Ausbeute,
- ein Maß für die relative Anzahl funktionsfähiger Produkte an der Gesamtproduktion,
- ein Maß für die Qualität der Produkte,
- ein Maß für einzelne Qualitätsparameter des Produktes,
- die Defektdichte, d.h. die Ablagerungen bzw. Strukturierungsfehler pro Bezugsfläche,
- die Stärke einer Kontamination, oder
- eine die Fertigung direkt beeinflussende Größe, z.B. die Genauigkeit einer Stepperjustage.

Insbesondere bei den letzten drei der genannten Größen werden andere Bindeglieder als Fertigungseinheiten zwischen den Werten für die Gütegröße, für die Untersuchungsgröße und die Ausgleichsgröße eingesetzt.

Beispielsweise kann als Gütegröße die in einem Fertigungsschritt entstehende Schichtdicke eines Oxids herangezogen werden, die über die Zeit hinweg als Untersuchungsgröße und unabhängig von der Ausgleichsgröße- hier die verschiedenen zum Fertigungsschritt gehörenden Fertigungsanlagen, beobachtet werden soll, um z.B. die Frage nach dem allgemeinen Einfluss des Luftdrucks auf die Schichtdicke zu klären.

Als Gütegröße kann beispielsweise aber auch die Justagegenauigkeit der Stepper untersucht werden. Als Ausgleichsgröße werden dann die verschiedenen verwendeten Stepper-Anlagen gewählt. Als Untersuchungsgröße ist hier z.B. die Qualität der Justiermarken geeignet, die auf Einflüsse bestimmter Prozesse schließen läßt.

Bei einer anderen Weiterbildung werden für die Untersuchungsgröße und für die Ausgleichsgröße zwei verschiedene Größen aus der folgenden Auswahl gewählt:

- die zur Fertigung eingesetzten Maschinen zur Ausführung des gleichen Fertigungsschrittes,
- die Art der gefertigten Produkte,
- verschiedene Zeitpunkte,
- verschiedene Zeitabschnitte der Produktion, beispielsweise verschiedene Tage, verschiedene Wochen oder verschiedene Monate,
- verschiedene Prozessierungsarten zur Herstellung des gleichen Produkts auf verschiedenen Wegen,
- ein Produktparameter, z.B. zur Beschreibung der Qualität des Produktes, z.B. ein Signal-Rausch-Verhältnis, oder
- ein Prozessparameter, z.B. die Ätzzeit.

Grundsätzlich lassen sich jedoch beliebige Größen in das Verfahren als Gütegröße, Untersuchungsgröße oder Ausgleichsgröße einbeziehen. Bei der Herstellung integrierter Schaltkreise beispielsweise auch die Dicke bestimmter Schichten oder die verwendeten Materialien.

Bei einer anderen Weiterbildung ist die Fertigung die Herstellung integrierter Schaltkreise in einem zum größten Teil automatisierten Fertigungsprozess. Der Fertigungsprozess enthält bei einer Ausgestaltung mehr als 50 Teilschritte, insbesondere auch mehr als 200 Teilschritte. Das erfindungsgemäße Verfahren und seine Weiterbildungen führen insbesondere bei der komplexen Herstellung integrierter Schaltkreise zu stark verkürzten Zeiten für die Suche nach einer Fehlerursache. Außerdem erhöht sich die Treffsicherheit, weil die justierten Daten untereinander vergleichbar sind, so dass mit erheblich weniger hochqualifiziertem Personal bzw. in kurzer Zeit eine Fehlerursache gefunden werden kann, als es bisher der Fall war. Ein anderes Beispiel für den Einsatz des erfindungsgemäßen Verfahrens ist die Überwachung der Endmontage von Kraftfahrzeugen.

Bei einer Weiterbildung des erfindungsgemäßen Verfahrens werden nach der Vorgabe der Werte für die Gütegröße, der Werte für die Untersuchungsgröße und der Werte für die Ausgleichsgröße, nach der Vorgabe eines Sortierkriteriums die Gruppen automatisch gebildet. Innerhalb der Gruppen wird dann automatisch sortiert. Die justierten Werte werden ebenfalls automatisch ermittelt, z.B. nach der oben genannten Formel berechnet. Durch die Automatisierung des erfindungsgemäßen Verfahrens müssen keine Bedienpersonen einbezogen werden. Außerdem lässt sich das Verfahren sehr schnell und ohne Fehler durchführen.

Bei einer nächsten Weiterbildung werden auch die Werte für die Gütegröße, für die Untersuchungsgröße und für die Ausgleichsgröße automatisch ermittelt bzw. erfasst. Diese Werte lassen sich beispielsweise aus einem System zur automatischen Steuerung der Produktion auslesen, z.B. aus einem Logistiksystem.

Bei einer anderen Weiterbildung werden die justierten Werte automatisch auf einer Anzeigeeinheit grafisch dargestellt. Insbesondere bei Farbdarstellungen lassen sich von erfahrenem Bedienpersonal bereits aus den angezeigten Werten Fehlerursachen vermuten.

Alternativ oder kumulativ wird mit den justierten Werten automatisch ein statistischer Signifikanztest ausgeführt. Der Bedienperson werden dann nur die Ergebnisse des Tests angezeigt. Die durch die Bedienperson aufzunehmende Datenmenge sinkt und die Entscheidung für eine bestimmte Fehlerursache wird treffsicherer.

Die Erfindung betrifft außerdem ein Programm mit einer Befehlsfolge, bei deren Ausführung durch einen Prozessor das erfindungsgemäße Verfahren oder eine seiner Weiterbildungen ausgeführt wird. Weiterhin betrifft die Erfindung eine Datenverarbeitungsanlage, die das erfindungsgemäße Programm enthält. Auch sind durch die Erfindung Daten betroffen, die justierte Werte enthalten, welche mit dem erfindungsgemäßen Verfahren oder mit einer Weiterbildung des erfindungsgemäßen Verfahrens ermittelt bzw. berechnet worden sind. Für das Programm, die Datenverarbeitungsanlage und die Daten gelten die oben genannten technischen Wirkungen.

Im Folgenden werden Ausführungsbeispiele der Erfindung an Hand der beiliegenden Zeichnungen erläutert. Darin zeigen:

Figur 1    die Ausbeute für verschiedene Fertigungseinheiten abhängig von der zur Herstellung eingesetzten Maschine,

Figur 2    die Ausbeute für verschiedene Fertigungseinheiten abhängig von der Art des hergestellten Produktes,

Figur 3    Verfahrensschritte zum Berechnen von justierten Ausbeutewerten,

Figur 4     die justierte Ausbeute für verschiedene Fertigungseinheiten abhängig von der Art der Produkte, und

Figur 5     die justierte Ausbeute für verschiedene Fertigungseinheiten abhängig von der zur Herstellung eingesetzten Maschine.

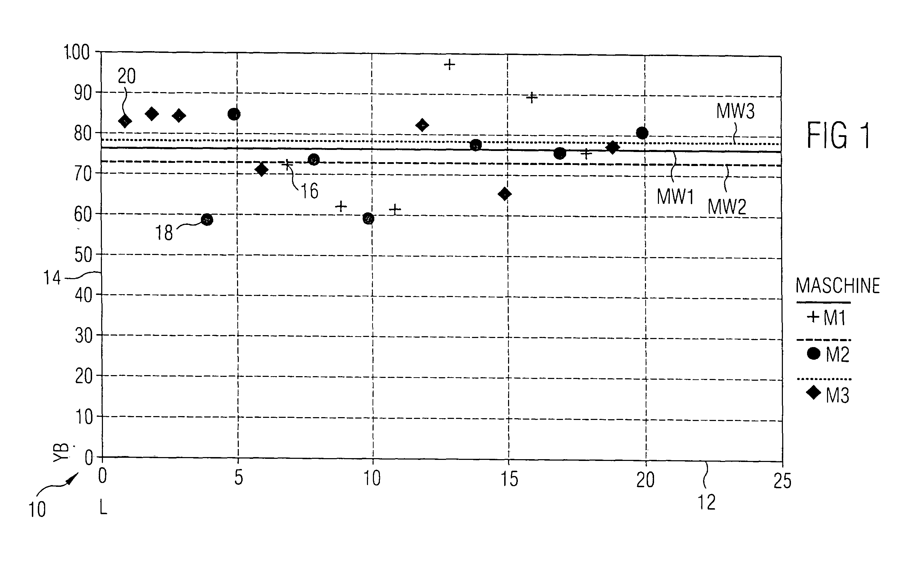

Figur 1 zeigt ein Koordinatensystem 10 zur Darstellung der Ausbeute YB für verschiedene Fertigungseinheiten abhängig von der zur Herstellung einer Fertigungseinheit eingesetzten Maschine. Eine Fertigungseinheit ist beispielsweise ein Fertigungslos mit 50 Wafern, die gemeinsam durch den Fertigungsprozess transportiert werden. Eine Abszissenachse 12 des Koordinatensystems 10 dient zur Darstellung der Losnummern L =1 bis L = 20. Auf einer Ordinatenachse 14 des Koordinatensystems 10 sind die Ausbeuten YB für die einzelnen Fertigungslose dargestellt. So hat das Fertigungslos mit der Losnummer L = 7 eine Ausbeute YB von 72,67 %, siehe Pluszeichen 16. Pluszeichen werden zur Darstellung der Ausbeute YB von Fertigungslosen verwendet, die mit Hilfe einer Maschine M1 hergestellt worden sind.

Mit ausgefüllten Kreisen wird die Ausbeute von Fertigungseinheiten dargestellt, die mit einer anderen Maschine M2 hergestellt worden sind, siehe beispielsweise den ausgefüllten Kreis 18 für das Fertigungslos L = 4 mit einer Ausbeute von 59,1 %. Die Ausbeute von Fertigungseinheiten, die mit Hilfe einer dritten Maschine M3 hergestellt worden sind, wird durch ausgefüllte Rauten dargestellt, siehe beispielsweise Raute 20 für die Ausbeute des Fertigungsloses mit der Losnummer L = 1 und einer Ausbeute YB von 83,34 %. Die Maschinen M1, M2 und M3 sind beispielsweise Belichtungsanlagen, sogenannte Stepper, des gleichen Fertigungsfabrikats und der gleichen Baureihe.

Für die in der Figur 1 dargestellten Ausbeuten gilt die folgende Tabelle (1):

| Losnummer L | Produkt P | Ausbeute YB | Maschine M |
|---|---|---|---|
| 1 | P4 | 83,34 | M3 |
| 2 | P4 | 85,41 | M3 |
| 3 | P4 | 84,85 | M3 |
| 4 | P1 | 59,10 | M2 |
| 5 | P4 | 85,36 | M2 |
| 6 | P2 | 71,80 | M3 |
| 7 | P3 | 72,67 | M1 |
| 8 | P3 | 74,08 | M2 |
| 9 | P1 | 62,51 | M1 |
| 10 | P1 | 59,21 | M2 |
| 11 | P1 | 62,11 | M1 |
| 12 | P4 | 82,74 | M3 |
| 13 | P4 | 98,25 | M1 |
| 14 | P2 | 77,82 | M2 |
| 15 | P3 | 65,44 | M3 |
| 16 | P4 | 89,81 | M1 |
| 17 | P2 | 76,19 | M2 |
| 18 | P3 | 76,16 | M1 |
| 19 | P2 | 77,75 | M3 |
| 20 | P2 | 81,46 | M2 |

In der linken Spalte der Tabelle sind die Losnummern L angegeben. In der rechts danebenliegenden Spalte sind die zu den Losnummern gehörenden Produkte P genannt. Beispielsweise enthält das Fertigungslos mit der Losnummer L = 1 integrierte Schaltkreise für ein Produkt P4, z.B. integrierte Schaltkreise für Mobilfunkgeräte. Andere Produkte P1 bis P3 betreffen beispielsweise Schaltkreise für einen dynamischen RAM (Random Access Memory), für einen EEPROM (Electrically Erasable Programmable Read Only Memory) bzw. einen Anwenderschaltkreis.

In der dritten Spalte der Tabelle sind die zu den Losnummern L gehörenden Ausbeuten YB in Prozent angegeben. In der vierten Spalte wird zu den Losnummern L jeweils ancegeben, mit welcher Maschine M1 bis M3 das entsprechende Los belichtet worden ist, beispielsweise bezüglich einer bestimmten Schicht der Schaltkreise.

In Figur 1 sind außerdem Mittelwerte MW1, MW2 und MW3 angegeben, die für die Ausbeuten der Maschinen M1, M2 bzw. M3 berechnet worden sind. Der Mittelwert MW2 der Ausbeuten für die Fertigungslose, die auf der Maschine M2 gefertigt worden sind, ist am geringsten und beträgt etwa 74 %. Darüber liegt der Mittelwert. MW1 für die Fertigungslose, die mit der Maschine M1 gefertigt worden sind. Der Mittelwert MW1 beträgt etwa 76 %. Der Mittelwert MW3 der Ausbeuten von Fertigungseinheiten, die mit der Maschine M3 hergestellt worden sind, beträgt etwa 79 % und ist damit größer als der Mittelwert MW1 und der Mittelwert MW2. Aus den Mittelwerten MW1 bis MW3 allein lassen sich noch keine sicheren Rückschlüsse ziehen, beispielsweise könnten auf der Maschine M2 mit dem kleinsten Mittelwert MW2 nur Produkte bearbeitet worden sein, deren Ausbeute YB immer verhältnismäßig klein ist.

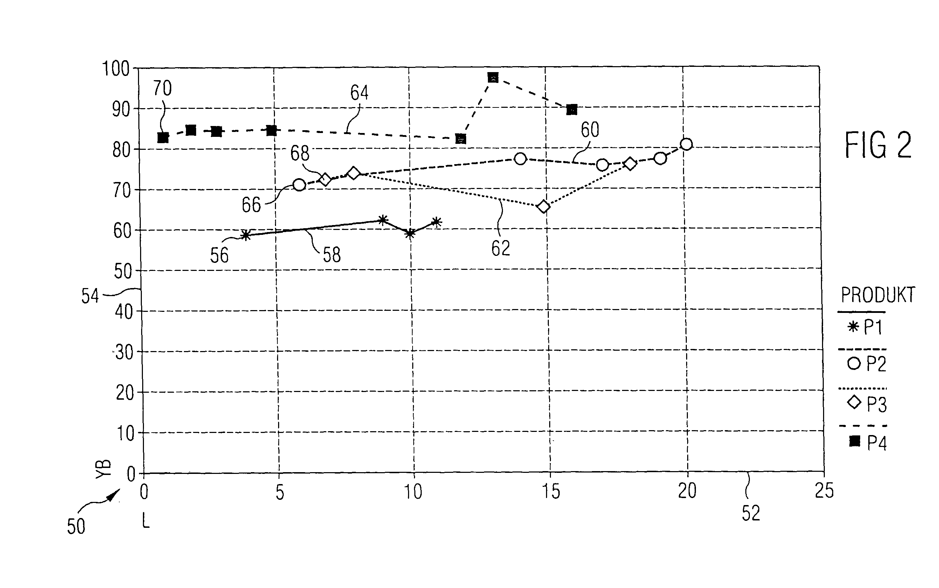

Figur 2 zeigt ein Koordinatensystem 50 zur Darstellung der Ausbeute für verschiedene Fertigungslose abhängig von der Art des hergestellten Produkts. Auf einer Abszissenachse 52 des Koordinatensystems 50 sind die Losnummern L der Fertigungslose dargestellt. Eine Ordinatenachse 54 des Koordinatensystems 50 dient zur Darstellung der Ausbeuten YB. Die in Figur 2 dargestellten Werte für die Ausbeuten YB der Fertigungslose L = 1 bis L = 20 stimmen mit den in Figur 1 dargestellten Werten überein. Jedoch sind Ausbeuten YB von Fertigungseinheiten, die das Produkt P1 betreffen, durch einen Stern dargestellt, siehe beispielsweise Stern 56 für das Fertigungslos L = 4, das eine Ausbeute YB von 59,1 % hatte. Die Ausbeuten YB, die das gleiche Produkt betreffen, sind in Figur 2 jeweils durch einen Kurvenverlauf 58, 60, 62 bzw. 64 verbunden. Die Kurvenverläufe 58, 60, 62 bzw. 64 betreffen in dieser Reihenfolge die Produkte P1, P2, P3 bzw. P4.

Die Ausbeuten YB für Fertigungslose zur Herstellung des Produktes P2 sind durch Kreise dargestellt, siehe beispielsweise Kreis 66 für die Ausbeute YB des Fertigungsloses mit der Losnummer L = 6, das eine Ausbeuten YB von 71,8 hatte.

Die Ausbeuten YB für Fertigungslose, die zu Produkten P3 bearbeiten worden sind, werden durch Rauten dargestellt, siehe beispielsweise die Raute 68 zur Darstellung der Ausbeute YB für das Fertigungslos mit der Losnummer L = 7, das eine Ausbeute YB von 72,67 % hatte.

Die Ausbeutewerte YB für Fertigungslose für das Produkt P4 werden in Figur 2 durch ausgefüllte Quadrate dargestellt, siehe beispielsweise das Quadrat 70 zur Darstellung der Ausbeute YB für das Fertigungslos mit der Losnummer L = 1. Das Fertigungslos mit der Losnummer L = 1 hatte, wie bereits erwähnt, eine Ausbeute von 83,34 %.

Aus Figur 2 ist erkennbar, dass die mittlere Ausbeute bei der Herstellung des Produktes P1 am geringsten ist, etwa 60 %. Die mittlere Ausbeute bei der Herstellung der Produkte P2 und P3 ist etwa gleich und liegt bei etwa 70 %. Die mittlere Ausbeute bei der Herstellung des Produktes P4 ist am größten und liegt über 85 %.

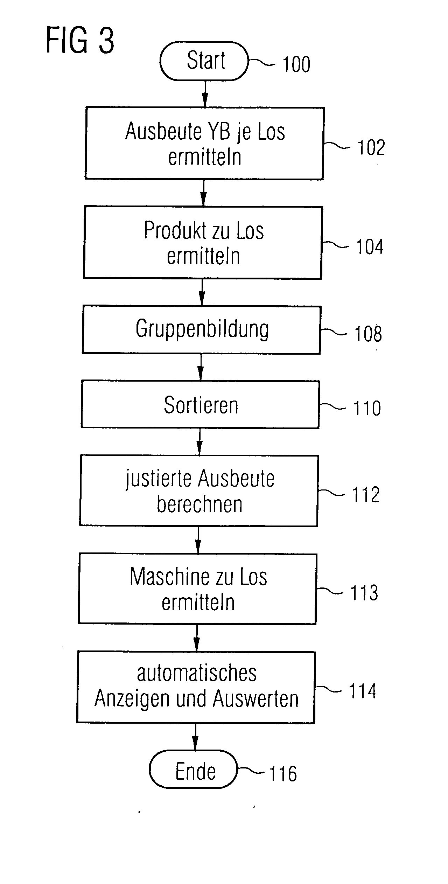

Figur 3 zeigt Verfahrensschritte zum Berechnen von justierten Ausbeutewerten JW mit Hilfe eines Programms auf einer Datenverarbeitungsanlage. Das Verfahren beginnt in einem Verfahrensschritt 100 mit der Auswahl der in die Prüfung einzubeziehenden Größen, z.B. der Ausbeute YB, der Art der gefertigten Produkte P1 bis P4 und der bei der Bearbeitung verwendeten Belichtungsmaschine M1 bis M3.

In einem dem Verfahrensschritt 100 folgenden Verfahrensschritt 102 wird die Ausbeute YB je Fertigungslos ermittelt, beispielsweise unter Verwendung eines Logistiksystems zur Steuerung der Fertigung der integrierten Schaltkreise. Im Beispiel gelten die oben in der Tabelle (1) angegebenen Ausbeuten YB für die jeweiligen Losnummern L.

In einem Verfahrensschritt 104 wird zu jeder Losnummer L ermittelt, welches Produkt auf den Wafern des Fertigungsloses mit der Losnummer L gefertigt worden ist, siehe Spalte 2 der Tabelle (1). Im Verfahrensschritt 104 wird wiederum auf das Logistiksystem zur Steuerung der Produktion oder auf eine andere Datenbasis zurückgegriffen, in welchem die Produkte P1 bis P4 zu den jeweiligen Losnummern L vermerkt sind.

In einem Verfahrensschritt 108 werden für verschiedene Ausprägungen der Ausgleichsgröße "Produktart" Gruppen G1 bis G4 gebildet. Eine erste Gruppe wird für das Produkt P4 gebildet.

Deshalb wird diese Gruppe als Gruppe G4 bezeichnet. Die Gruppe G4 enthält sieben Fertigungslose, nämlich die Fertigungslose mit den Losnummern L = 1, L = 2, L = 3, L = 5, L = 12, L = 13 und L = 16.

Für das Produkt P3 wird eine Gruppe G3 gebildet, die vier Fertigungslose enthält, nämlich die Fertigungslose mit den Losnummern L = 7, L = 8, L = 15 und L = 18. Für das Produkt P2 wird eine Gruppe G2 gebildet, die fünf Fertigungseinheiten enthält, nämlich die Fertigungslose mit den Losnummern L = 6, L = 14, L = 17, L = 19 und L = 20. Schließlich wird auch für das Produkt P1 eine Gruppe G1 gebildet, die vier Fertigungslose enthält, nämlich die Fertigungslose mit den Losnummern L = 4, L = 9, L = 10 und L = 11.

In einem folgenden Verfahrensschritt 110 werden die Zeilen innerhalb einer Gruppe G1 bis G4 nach der Größe der Ausbeute YB sortiert, wobei kleine Ausbeuten YB an die erste Stelle der Rangfolge gesetzt werden und größere Ausbeuten YB größere Ränge als kleiner Ausbeuten YB haben. Es entstehen die ersten drei Spalten von links in der folgenden Tabelle (2):

| Losnummer L | Produkt P | Ausbeute YB | Maschine M | Rang R | Anzahl N | just. Ausbeute JW |
|---|---|---|---|---|---|---|
| 12 | P4 | 82,74 | M3 | 1 | 7 | 12,50 |
| 1 | P4 | 83,34 | M3 | 2 | 7 | 25,00 |
| 3 | P4 | 84,85 | M3 | 3 | 7 | 37,50 |
| 5 | P4 | 85,36 | M2 | 4 | 7 | 50,00 |
| 2 | P4 | 85,41 | M3 | 5 | 7 | 62,50 |
| 16 | P4 | 89,81 | M1 | 6 | 7 | 75,00 |
| 13 | P4 | 98,25 | M1 | 7 | 7 | 87,50 |
| | | | | | | |
| 15 | P3 | 65,44 | M3 | 1 | 4 | 20,00 |
| 7 | P3 | 72,67 | M1 | 2 | 4 | 40,00 |
| 8 | P3 | 74,08 | M2 | 3 | 4 | 60,00 |
| 18 | P3 | 76,16 | M1 | 4 | 4 | 80,00 |
| | | | | | | |
| 6 | P2 | 71,80 | M3 | 1 | 5 | 16,67 |
| 17 | P2 | 76,19 | M2 | 2 | 5 | 33,33 |
| 19 | P2 | 77,75 | M3 | 3 | 5 | 50,00 |
| 14 | P2 | 77,82 | M2 | 4 | 5 | 66,67 |
| 20 | P2 | 81,46 | M2 | 5 | 5 | 83,33 |
| | | | | | | |
| 4 | P1 | 59,10 | M2 | 1 | 4 | 20,00 |
| 10 | P1 | 59,21 | M2 | 2 | 4 | 40,00 |
| 11 | P1 | 62,11 | M1 | 3 | 4 | 60,00 |
| 9 | P1 | 62,51 | M1 | 4 | 4 | 80,00 |

Die Spalten der Tabelle betreffen von links nach rechts die Losnummer L, die Produktart P und die Ausbeute YB. In der Tabelle (2) sind die Gruppen G4, G3, G2 und G1 in dieser Reihenfolge von oben nach unten durch Leerzeilen voneinander getrennt.

Anschließend werden den sortierten Zeilen jeder Gruppe Ränge R zugeordnet. Die erste Zeile erhält den Rang R =1, die zweite Zeile den Rang R = 2 usw., siehe fünfte Spalte von links der Tabelle (2). Für jede Zeile wird außerdem die Anzahl N der Zeilen bzw. der Fertigungslose ermittelt, die in der Gruppe enthalten sind, zu der die Zeile gehört. In der Gruppe G4 sind beispielsweise sieben Zeilen bzw. Fertigungslose enthalten, siehe sechste Spalte von links der Tabelle (2).

In einem Verfahrensschritt 112 werden für die Losnummern L jeder Gruppe G1 bis G4 bzw. für jede Produktart P1 bis P4 justierte Ausbeutewerte nach der folgenden Fornel berechnet:

$$JW = R/(N+1),$$

wobei JW die justierte Ausbeute, R die Stelle in der Sortierreihenfolge und N die Anzahl der Fertigungslose in der betreffenden Gruppe G1 bis G4 sind. Für die Losnummer L = 12 berechnet sich die justierte Ausbeute JW also dadurch, dass der Wert Eins für den Rang durch die um den Wert Eins erhöhte Anzahl N = 7 der Fertigungslose in der Gruppe G4 dividiert wird. Es ergibt sich der Wert 12,50. Die anderen Werte für die justierte Ausbeute JW sind in der oben stehenden Tabelle (2) in der rechten Spalte aufgelistet.

In einem Verfahrensschritt 113 wird zu jeder Losnummer L = 1 bis L = 20 die Maschine M1 bis M3 ermittelt, die bei der Belichtung einer bestimmten Schicht, z.B. der dem Substrat am nächsten liegenden Schicht, eingesetzt worden sind, siehe rechte Spalte der oben angegebenen Tabelle (1) bzw. vierte Spalte der Tabelle (2). Diese Daten werden ebenfalls dem System zur Steuerung der Produktion entnommen.

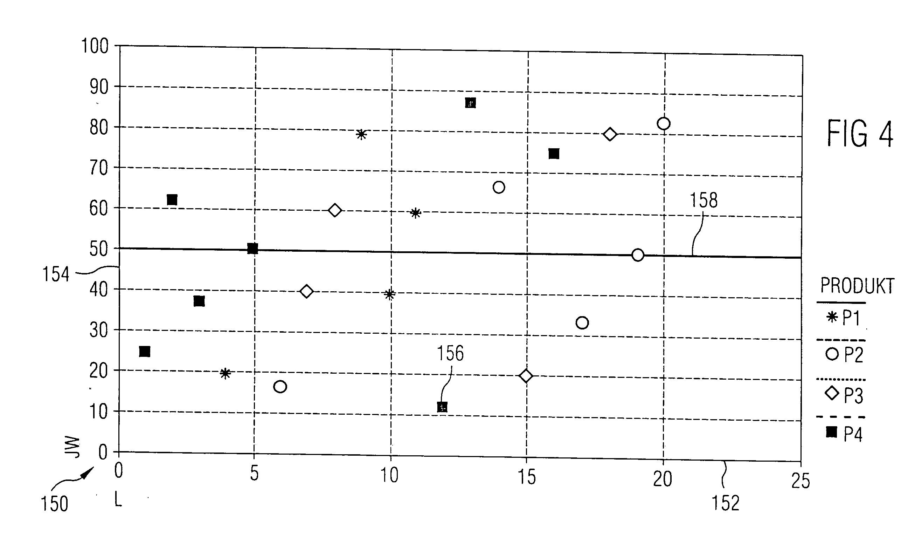

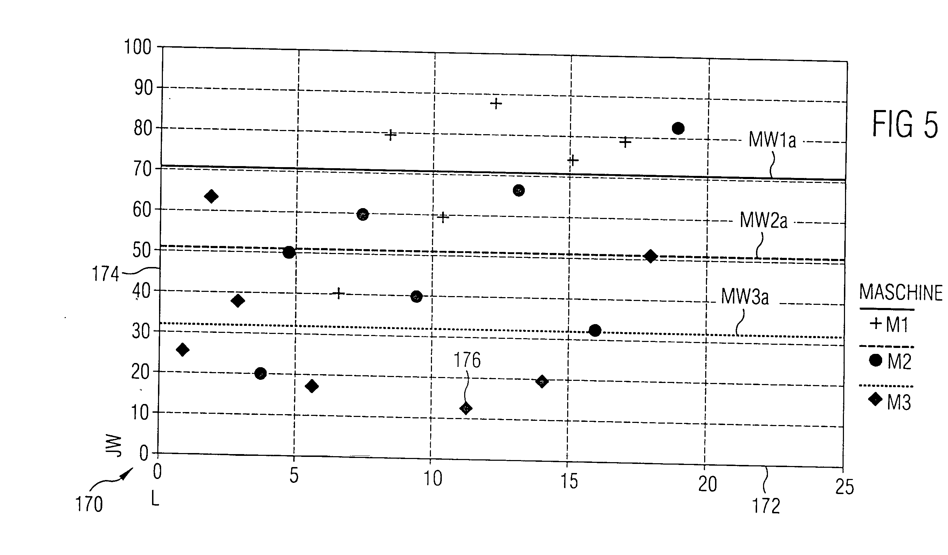

In einem nächsten Verfahrensschritt 114 werden die justierten Ausbeutewerte JW auf einer Anzeigeeinheit der Datenverarbeitungsanlage grafisch ausgegeben. Die dabei sichtbaren Koordinatensysteme werden unten an Hand der Figuren 4 und 5 näher erläutert. Außerdem wird im Verfahrensschritt 114 eine automatische Auswertung mit Hilfe der justierten Ausbeutewerte JW durchgeführt. Dabei werden statistische Testverfahren eingesetzt, die unten an Hand der Figur 5 näher erläutert werden.

In einem Verfahrensschritt 116 wird das Verfahren beendet. Abhängig vom Ergebnis der Auswertung wird entweder eine Fehlerursache an einer Stelle der Fertigung gesucht, auf die die statistischen Daten hinweisen. Werden keine signifikanten Testergebnisse erzeugt oder ist die Effektstärke zu gering, so wird das Verfahren mit anderen Testgrößen wiederholt, bis signifikante Unterschiede gefunden werden.

Figur 4 zeigt ein Koordinatensystem 150 zur Darstellung der justierten Ausbeute JW für verschiedene Fertigungslose abhängig von der Art der hergestellten Produkte P1 bis P4. Auf einer Abszissenachse 152 des Koordinatensystems 150 ist die Losnummer L dargestellt. Eine Ordinatenachse 154 des Koordinatensystems 150 zeigt die Werte für die justierte Ausbeute JW, die im Verfahrensschritt 112 berechnet worden sind, siehe Figur 3. Zur Darstellung der justierten Ausbeuten JW für verschiedene Produkte P1 bis P4 werden die bereits in Figur 2 verwendeten Symbole verwendet. So zeigt ein ausgefülltes Quadrat 156 die justierte Ausbeute JW für das Fertigungslos mit der Losnummer L = 12, die zu 12,50 % berechnet worden ist. Eine horizontale Linie 158 zeigt die Mittelwerte der justierten Ausbeute für das Produkt P1, P2, P3 und das Produkt P4. Alle Mittelwerte liegen bei 50 %. Durch die Justierung mit Hilfe des oben an Hand der Figur 3 erläuterten Verfahrens sind also Produktunterschiede eliminiert worden. Die Art der Produkte hat also keinen Einfluss auf die so justierte Ausbeute JW.

Figur 5 zeigt ein Koordinatensystem 170 zur Darstellung der justierten Ausbeute für verschiedene Fertigungseinheiten abhängig von der zur Herstellung der betreffenden Fertigungseinheit eingesetzten Maschine M1, M2 bzw. M3. Eine Abszissenachse 172 dient zur Darstellung der Losnummern L = 1 bis L = 20. Eine Ordinatenachse 174 dient zur Darstellung der Werte für die justierte Ausbeute JW. Zur Darstellung der Ausbeutewerte JW für Fertigungslose, die mit der Maschine M1, M2 bzw. M3 bearbeitet worden sind, werden die bereits an Hand der Figur 1 genutzten Symbole verwendet, siehe beispielsweise die ausgefüllte Raute 176 für die justierte Ausbeute JW des Fertigungsloses mit der Losnummer L = 12, das mit der Maschine M3 hergestellt worden ist. Der justierte Ausbeutewert JW des Fertigungsloses L=12 beträgt, wie bereits an Hand der Figur 4 erläutert, 12,50 %.

In Figur 5 sind durch horizontale Linien außerdem die Mittelwerte MW1a bis MW3a für die justierten Ausbeutewerte JW der Fertigungslose dargestellt, die mit der Maschine M1, M2 bzw. M3 hergestellt worden sind. Der Mittelwert MW1a für die Maschine M1 liegt bei etwa 70 %. Der Mittelwert MW2a der justierten Ausbeuten JW von Fertigungslosen, die mit der Maschine M2 bearbeitet worden sind, liegt bei 50 %. Der Mittelwert MW3a der justierten Ausbeutewerte JW für Fertigungslose, die mit der Maschine M3 bearbeitet worden sind, liegt bei etwa 32 %. Bereits die Größe der Mittelwerte MW1a, MW2a und MW3a lässt darauf schließen, dass die zur Bearbeitung benutzte Maschine M1, M2 bzw. M3 einen signifikanten Eilfluss auf die justierte Ausbeute JW und letztlich auch auf die Ausbeute YB hat. Diese Hypothese lässt sich mit einem aus der Statistik bekannten Signifikanztest prüfen. Sind die Testergebnisse signifikant, so kann die Fehlerursache für eine zu geringe Ausbeute im Umfeld der Maschine M3 gesucht werden.

**Patentansprüche**

1. Verfahren zum Überwachen einer Fertigung,
   bei dem Werte für eine Gütegröße (YB) zur Bewertung der Fertigung ermittelt werden (Schritt 102),
   bei dem Werte für mindestens eine Untersuchungsgröße (M1 bis M3) ermittelt werden, deren Auswirkung auf die Gütegröße (YB) zu untersuchen sind (Schritt 104),
   bei dem Werte für eine Ausgleichsgröße (P1 bis P5) ermittelt werden, deren Auswirkung auf die Gütegröße (YB) ausgeglichen werden soll (Schritt 106),
   bei dem für vorgegebene Ausprägungen der Ausgleichsgröße (P1 bis P5) Gruppen (G1 bis G4) gebildet werden,
   bei dem innerhalb der Gruppen (G1 bis G4) die Werte der Gütegröße (YB) sortiert werden (Schritt 110),
   bei dem abhängig von der Sortierreihenfolge für die Gütegröße justierte Werte (JW) ermittelt werden, welche ein Maß für den Platz in der Sortierreihenfolge sind (Schritt 112),
   und bei dem die justierten Werte (JW) für die weitere Bearbeitung gespeichert oder zur Auswertung auf einer Ausgabeeinheit ausgegeben werden (Schritt 114).

2. Verfahren nach Anspruch 1, **dadurch gekennzeichnet , dass** auf Fertigungseinheiten bezogene Werte für eine Gütegröße (YB) zur Bewertung der Fertigung ermittelt werden (Schritt 102),
   dass für die Fertigungseinheiten (L) jeweils ein Wert für mindestens eine Untersuchungsgröße (M1 bis M3) ermittelt

wird, deren Auswirkung auf die Gütegröße (YB) zu untersuchen sind (Schritt 104),
dass für die Fertigungseinheiten (L) jeweils ein Wert für eine Ausgleichsgröße (P1 bis P5) ermittelt wird, deren Auswirkung auf die Gütegröße (YB) ausgeglichen werden soll (Schritt 106),
dass für vorgegebene Ausprägungen der Ausgleichsgröße (P1 bis P5) Gruppen (G1 bis G4) gebildet werden, in denen Fertigungseinheiten (L) enthalten sind, bei denen die Ausgleichsgröße (P1 bis P5) einen Wert hat, welcher die der Gruppe (G1 bis G4) zugeordnete Ausprägung erfüllt (Schritt 108),
dass innerhalb der Gruppen (G1 bis G4) die Fertigungseinheiten nach der Gütegröße (YB) sortiert werden (Schritt 110),
dass abhängig von der Sortierreihenfolge für die Fertigungseinheiten justierte Werte (JW) ermittelt werden, welche ein Maß für den Platz in der Sortierreihenfolge sind (Schritt 112),
und dass die justierten Werte (JW) für die weitere Bearbeitung gespeichert oder zur Auswertung auf einer Ausgabeeinheit ausgegeben werden (Schritt 114).

3. Verfahren nach Anspruch 1 oder 2, **dadurch gekennzeichnet, dass** mit Hilfe der justierten Werte (JW) geprüft wird, ob die Untersuchungsgröße (M1 bis M3) einen Einfluss auf die Gütegröße (YB) hat.

4. Verfahren nach einem der vorhergehenden Ansprüche, **da-durch gekennzeichnet, dass** die justierten Werte (JW) nach der folgenden Formel berechnet werden:

$$JW = R/(N+1),$$

wobei JW der justierte Wert, R die Stelle in der Sortierreihenfolge und N die Anzahl der Werte der Gütegröße in der Gruppe (G1 bis G4) sind.

5. Verfahren nach einem der vorhergehenden Ansprüche, **da-durch gekennzeichnet, dass** die Gütegröße das Verhältnis aus der Anzahl funktionsfähiger Schaltkreise zur Gesamtanzahl von Schaltkreisen auf einer Siliziumscheibe, ein Maß für die Qualität der Produkte oder für einzelne Qualitätsparameter eines Produktes ist,
und/oder dass die Untersuchungsgröße (M1 bis M3) die zur Fertigung eingesetzten Maschinen zur Ausführung des gleichen Fertigungsschrittes, die Art der gefertigten Produkte, verschiedene Zeitpunkte, verschiedene Zeitabschnitte, verschiedene Prozessierungsarten zur Herstellung des gleichen Produktes, verschiedene Produktparameter oder verschiedene Prozessparameter betrifft,
und/oder dass die Ausgleichsgröße (P1 bis P4) die zur Fertigung eingesetzten Maschinen zur Ausführung des gleichen Fertigungsschrittes, die Art der gefertigten Produkte, verschiedene Zeitpunkte, verschiedene Zeitabschnitte, verschiedene Prozessierungsarten zur Herstellung des gleichen Produktes, verschiedene Produktparameter oder verschiedene Prozessparameter betrifft, soweit nicht bereits als Untersuchungsgröße eingesetzt.

6. Verfahren nach einem der vorhergehenden Ansprüche, **da-durch gekennzeichnet, dass** die Fertigung die Herstellung integrierter Schaltkreise in einem zum großen Teil automatisierten oder vollautomatisierten Fertigungsprozess ist,
und/oder dass der Fertigungsprozess mehr als 50 Teilschritte oder mehr als 200 Teilschritte enthält.

7. Verfahren nach einem der vorhergehenden Ansprüche, **da-durch gekennzeichnet, dass** nach der Vorgabe der Werte für die Gütegröße (YB), der Werte für die Untersuchungsgröße (M1 bis M3), der Werte für die Ausgleichsgröße (P1 bis P5) und der Vorgabe eines Sortierkriteriums, die Gruppen (G1 bis G4) automatisch gebildet werden, dass innerhalb der Gruppen (G1 bis G4) automatisch sortiert wird (Schritt 110),
und dass die justierten Werte (JW) automatisch ermittelt werden (Schritt 112).

8. Verfahren nach Anspruch 7, **dadurch gekennzeichnet, dass** die Werte für die Gütegröße (YB) und/oder die Werte für die Untersuchungsgröße (M1 bis M3) und/oder die Werte für die Ausgleichsgröße (P1 bis P5) automatisch erfasst werden.

9. Verfahren nach Anspruch 7 oder 8, **dadurch gekennzeichnet, dass** die justierten Werte (JW) automatisch auf einer Anzeigeeinheit grafisch oder numerisch dargestellt werden (Schritt 114).

10. Verfahren nach einem der Ansprüche 7 bis 9, **dadurch gekennzeichnet, dass** mit den justierten Werten (JW) automatisch statistische Signifikanztests ausgeführt werden (Schritt 114).

**11.** Programm mit einer Befehlsfolge, bei deren Ausführung durch einen Prozessor ein Verfahren nach einem der vorhergehenden Ansprüche ausgeführt wird.

**12.** Datenverarbeitungsanlage, **dadurch gekennzeichnet , dass** die Datenverarbeitungsanlage ein Programm nach Anspruch 10 enthält.

**13.** Daten, **dadurch gekennzeichnet, dass** die Daten justierte Werte (JW) enthalten, die mit einem Verfahren nach einem der Ansprüche 1 bis 10 ermittelt worden sind.

FIG 1

FIG 2

EP 1 235 127 A2

FIG 3

Start — 100

Ausbeute YB je Los
ermitteln — 102

Produkt zu Los
ermitteln — 104

Gruppenbildung — 108

Sortieren — 110

justierte Ausbeute
berechnen — 112

Maschine zu Los
ermitteln — 113

automatisches
Anzeigen und Auswerten — 114

Ende — 116

FIG 4

PRODUKT
* P1
○ P2
◇ P3
■ P4

158

156

154

150

JW

L

100 90 80 70 60 50 40 30 20 10 0

0 5 10 15 20 25

152

FIG 5

EP 1 235 127 A2